(19) Europäisches Patentamt / European Patent Office / Office européen des brevets

(11) **EP 1 364 163 B1**

(12) **EUROPÄISCHE PATENTSCHRIFT**

(45) Veröffentlichungstag und Bekanntmachung des Hinweises auf die Patenterteilung:
**23.04.2008  Patentblatt 2008/17**

(21) Anmeldenummer: **02753707.5**

(22) Anmeldetag: **28.02.2002**

(51) Int Cl.:
*F23N 1/00* *(2006.01)*    *F02D 41/14* *(2006.01)*

(86) Internationale Anmeldenummer:
**PCT/EP2002/002136**

(87) Internationale Veröffentlichungsnummer:
**WO 2002/077527 (03.10.2002 Gazette 2002/40)**

(54) **VERFAHREN ZUR REGELUNG EINES THERMODYNAMISCHEN PROZESSES, INSBESONDERE EINES VERBRENNUNGSPROZESSES**

METHOD FOR REGULATING A THERMODYNAMIC PROCESS IN PARTICULAR A COMBUSTION PROCESS

PROCEDE DE REGULATION D'UN PROCESSUS THERMODYNAMIQUE, EN PARTICULIER D'UN PROCESSUS DE COMBUSTION

(84) Benannte Vertragsstaaten:
**AT BE CH CY DE DK ES FI FR GB GR IE IT LI LU MC NL PT SE TR**
Benannte Erstreckungsstaaten:
**RO**

(30) Priorität: **02.03.2001  DE 10110184**
**14.03.2001  DE 10112160**
**10.12.2001  DE 10160412**

(43) Veröffentlichungstag der Anmeldung:
**26.11.2003  Patentblatt 2003/48**

(73) Patentinhaber: **Powitec Intelligent Technologies GmbH**
**45219 Essen (DE)**

(72) Erfinder:
• **WINTRICH, Franz**
**45309 Essen (DE)**
• **STEPHAN, Volker**
**99976 Hüpstedt (DE)**

(74) Vertreter: **Patentanwälte Hosenthien-Held und Dr. Held Klopstockstrasse 63 70193 Stuttgart (DE)**

(56) Entgegenhaltungen:
**US-A- 5 559 690        US-A- 5 933 345**

• **PFLIPSEN K ET AL: "FEUERUNGSOPTIMIERUNG MIT NEURONALEN NETZEN UND FUZZY-LOGIC AN EINEMBRAUNKOHLEKESSEL" VGB KRAFTWERKSTECHNIK, VGB KRAFTWERKSTECHNIK GMBH. ESSEN, DE, Bd. 80, Nr. 11, 2000, Seiten 47-50, XP000967951 ISSN: 0372-5715**
• **GIEREND C: "FUZZY CONTROL IN KRAFTWERKEN" VGB KRAFTWERKSTECHNIK, VGB KRAFTWERKSTECHNIK GMBH. ESSEN, DE, Bd. 78, Nr. 5, 1998, Seiten 118-125, XP000742277 ISSN: 0372-5715**
• **MCMANUS K ET AL: "Closed-loop system for control of combustor pattern factor" CONTROL APPLICATIONS, 1995., PROCEEDINGS OF THE 4TH IEEE CONFERENCE ON ALBANY, NY, USA 28-29 SEPT. 1995, NEW YORK, NY, USA,IEEE, US, 28. September 1995 (1995-09-28), Seiten 699-704, XP010207322 ISBN: 0-7803-2550-8**

**Beschreibung**

Die Erfindung betrifft ein Verfahren zur Regelung eines Verbrennungsprozesses mit den Merkmalen des Oberbegriffs des Anspruches 1.

Bei einem Verfahren dieser Art, wie es im Artikel "Feuerungsoptimierung mit neuronalen Netzen und Fuzzy-Logic an einem Braunkohlekessel", VGB KraftwerksTechnik, Bd. 80, Nr. 11 (2000), S. 47-50 beschrieben ist, wird ein neuronales Netz an einem möglichst optimalen Zustand des Systems trainiert und ein Prozessmodell zur Vorhersage geschaffen. Durch Invertierung steht ein Optimierungsmodell zur Verfügung, welches unter Vorgabe der Optimierungsziele die notwendigen Eingangsgrößen liefert. Bei Veränderungen muss das neuronale Netz erneut trainiert werden.

Es ist auch bekannt, bei einem Verfahren der eingangs genannten Art aus den Zustandsvariablen und den möglichen Stellaktionen unter Berücksichtigung der Optimierungsziele durch Faltung eine Güte zu bilden. Im Rahmen eines Monte-Carlo-Verfahrens wird ausgehend von einem alten Zustand eine Stellaktion ausgeführt und der neue Zustand bestimmt. Die daraus resultierende Änderung der Güte ist ein Maß für die Eignung der ausgeführten Stellaktion zur Erreichung des Optimierungsziels. Das System passt sich mit diesem Verfahren dem nächstliegenden Extremum an, auch bei häufigen Änderungen der Optimierungsziele. Auch dieses Verfahren lässt noch Wünsche übrig.

Der vorliegenden Erfindung liegt die Aufgabe zugrunde, ein Verfahren der eingangs genannten Art zu verbessern. Diese Aufgabe wird durch ein Verfahren mit den Merkmalen des Anspruches 1 gelöst. Weitere vorteilhafte Ausgestaltungen sind Gegenstand der Unteransprüche.

Dadurch, dass ein von den Optimierungszielen unabhängiges Prozessmodell ermittelt wird, welches die Auswirkungen von Aktionen auf die Zustandsvariablen des Systems beschreibt, und eine vom Prozessmodell unabhängige Situationsbewertung mittels Gütefunktionen die Zustandsvariablen in Hinblick auf die Optimierungsziele bewertet, steht ein modell-basiertes Regelungsverfahren zur Verfügung, das sowohl bei der Bewertung des durch die Zustandsvariablen beschriebenen Zustandes des Systems im Kessel als auch nach größeren Änderungen des Zustandes die Informationen aus der Vergangenheit weiter verwenden kann. Bei dem bekannten Verfahren hingegen müssen für die Ermittlung der Güte fast alle Informationen neu beschafft werden, d.h. mit der Adaption an einen neuen Zustand werden die alten Informationen verlernt.

Aufgrund der eingesparten Rechnerleistung können mit dem erfindungsgemäßen "Prozessnavigator" vorzugsweise die Zustände im voraus berechnet und nur geeignete Stellaktionen zur Erreichung des Optimierungsziels durchgeführt werden. Dabei wird das Prozessmodell ständig verfeinert, um künftig günstiger das Optimierungsziel zu erreichen. Bei einer bevorzugten Behandlung des Prozessmodells in einem neuronalen Netz wird vorzugsweise zunächst eine Initialisierung mit ausgewählten Zuständen und einem geglätteten und gewichteten Zeitverhalten des Systems durchgeführt, um später ziellose Stellaktionen zu vermeiden.

Durch die Einbeziehung der Betätigung eines Kesselbläsers (Rußbläsers) als Stellaktion und/oder die Korngröße des Brennstoffs als Stellgröße stehen mehr Stellgrößen zur Verfügung, um die Regelung durchzuführen. Zugleich sind die neuen Stellgrößen keine Störquellen mehr, welche bei einer Aktivierung einen höheren Regelungsaufwand hervorrufen. Statt beider Stellgrößen in Kombination kann auch nur eine dieser Größen für die Regelung einbezogen werden. Vorzugsweise wird der Einfluss der neuen Stellgrößen vorab in einer Initialisierungsphase gemessen, um die Regelung, die beispielsweise mit Hilfe eines neuronalen Netzes erfolgt, entsprechend zu trainieren. Die erfindungsgemäße Einbeziehung ist bei Verbrennungsprozessen und bei anderen thermodynamischen Prozessen anwendbar.

Beim Kesselbläser wird die Entscheidung über eine Betätigung vorzugsweise durch eine Abschätzung zwischen Erfolg und Aufwand getroffen, indem beispielsweise fiktive Kosten definiert werden und über ein Zeitintervall integriert werden, damit die Entscheidung vollautomatisch erfolgen kann. Bei der Einbeziehung der Brennstoff-Korngröße kann zusätzlich auch der Verschleiß der zugeordneten Mühle berücksichtigt werden, um die Regelung zu verfeinern. Die Auswirkungen unterschiedlicher Korngrößen werden in bevorzugter Weise über die Fluktuationen im Strahlungsbild einer Flamme gemessen. Mit den gewonnenen Informationen über die Auswirkungen der Betätigung des Kesselbläsers, der Brennstoff-Korngröße und des Verschleißes der Mühle können auch der Kesselbläser bzw. die Mühle für sich alleine geregelt werden, ohne daß der Verbrennungsprozeß hierzu geregelt wird.

Wenn bei Systemen mit Probenentnahmevorrichtungen der mit den Sensoren verbundene Rechner den Zeitpunkt zur Betätigung der Probenentnahmevorrichtung festlegt, werden zum einem die Ressourcen geschont, da nur die benötigte Anzahl von Probenauswertungen durchgeführt werden muß. Zum anderen stehen in kritischen Situationen mehr Daten für einen Entscheidungsprozeß im Rechner zur Verfügung, was beispielsweise eine optimalere Regelung ermöglicht. Die Probenentnahme ist somit vollständig in den Überwachungsvorgang und vorzugsweise in den Regelungsvorgang einbezogen. Außer der Probenentnahmevorrichtung sind noch weitere "offline"-Sensoren denkbar, welche zusammen mit den "online"-Sensoren Daten an den Rechner liefern. Die Betätigung der Probenentnahmevorrichtung kann manuell oder maschinell erfolgen.

Im folgenden ist die Erfindung anhand eines Ausführungsbeispiels mit in der Zeichnung dargestellten Anwendungsbeispielen näher erläutert. Es zeigen

Fig. 1    einen schematischen Aufbau eines Anwendungsbeispiels des erfindungsgemäßen Verfahrens,

Fig. 2    ein Zeitdiagramm eines beispielhaften Prozeßparameters über mehrere Reinigungsintervalle hinweg,

Fig. 3    ein Zeitdiagramm der Kosten im Verschmutzungs- und Reinigungsmodell, und

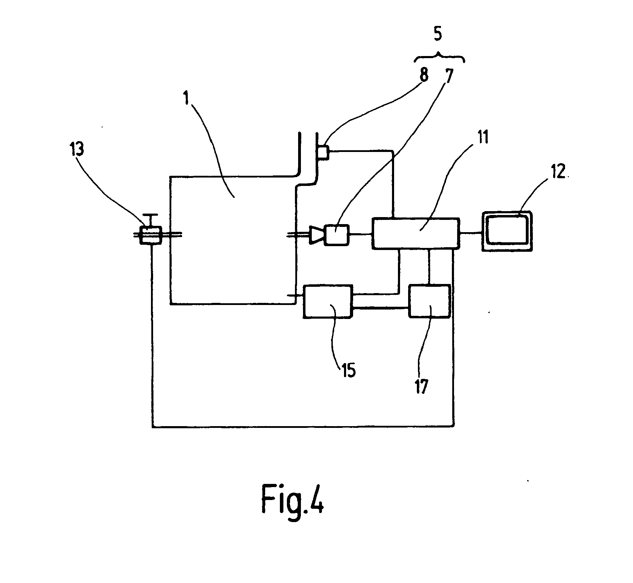

Fig. 4    einen schematischen Aufbau eines weiteren Anwendungsbeispiels.

Der beispielhafte Prozeß läuft als Verbrennungsprozeß in einem Feuerungskessel eines Kohlekraftwerkes ab und soll so geregelt werden, daß er einerseits eine gewisse Stabilität und andererseits eine gewisse Plastizität aufweist, d.h. sich den Gegebenheiten anpaßt. Der Zustand im Kessel wird beschrieben durch (zeitabhängige) Zustandsvariablen $s_t$, beispielsweise Temperaturen an verschiedenen Stellen im Kessel, Flammentexturen und/oder Konzentrationen verschiedener Schadstoffe in der Abluft, die durch geeignete Sensoren ermittelt werden. Für die formelmäßige Beschreibung des Verbrennungsprozesses sind die Parameter und Variablen, wie beispielsweise $s_t$, als mehrdimensionale Vektoren zu verstehen. Der Zustand $s_t$, des Verbrennungsprozesses kann geändert werden durch verschiedene Aktionen $a_t$, insbesondere durch eine Änderung der Stellgrößen, wie beispielsweise der Zufuhr von Kohle, Kernluft oder Ausblasluft, aber auch der Kohlequalität. Es bestehen Optimierungsziele $r^j$ für den Verbrennungsprozeß, beispielsweise daß die Konzentration von Stickoxiden $NO_x$ und Kohlenmonoxid CO unterhalb von vorgegebenen Grenzwerten liegen oder minimal werden.

Für eine online-Überwachung und -Regelung und Vorhersagen über künftige Zustände des Kessels mit Hilfe eines neuronalen Netzes wird erfindungsgemäß zum einen ein Prozeßmodell PM definiert, welches die Änderung des Zustandes $s_t$ des Verbrennungsprozesses als Reaktion auf Aktionen $a_t$ angibt. Das Prozeßmodell PM ist unabhängig von den Optimierungszielen $r^j$ und operiert auf einem Zeitfenster zurückliegender Prozeßzustände, um einen zeitlichen Kontext zu integrieren. In den Verknüpfungen der Variablen stecken Informationen über spezifische Eigenschaften des Kessels. Zum anderen wird für eine Situationsbewertung SB eine Güte $u_t$ definiert, welche einen bestimmten, aktuellen Zustand $s_t$ unter Berücksichtigung der Optimierungsziele $r^j$ bewertet. Diese Definition erfolgt nach den Gesichtspunkten vorgegebener Kennlinien und einer Fuzzy-Logik, also im einfachsten Fall ist beispielsweise für eine bestimmter Schadstoffkonzentration die Güte $u_t = 1$ bei verschwindender Schadstoffkonzentration, $u_t = 0$ bei Erreichen des oberen Grenzwertes der Schadstoffkonzentration, und dazwischen besteht eine lineare Abhängigkeit. Die Situationsbewertung SB ist unabhängig von den Aktionen $a_t$. Für die Bewertung zum Zeitpunkt t und den Schritt zum Zeitpunkt t+1 ergibt sich:

$$u_t \quad = \quad \Sigma\, u(r^j, s_t) \qquad \text{(SB)}$$

$$s_{t+1} \quad = \quad f(s_t, a_t) \qquad \text{(PM)}$$

Gegenüber der bekannten Gütefunktion, welche den Zustand des Systems, die Aktionen und die Optimierungsziele faltet, so daß bei Änderungen des Zustandes die gesamte Gütefunktion neu ermittelt werden muß, bleibt bei dem erfindungsgemäßen Verfahren das Prozeßmodell PM erhalten. Bei einer numerischen Realisierung mittels eines neuronalen Netzes bedeutet dies, daß nicht unter Verlust der Informationen aus der Vergangenheit das gesamte neuronale Netz bei jeder Aktion neu adaptiert werden muß, was Rechnerkapazität und -zeit kostet, sondern Informationen über das Prozeßmodell erhalten bleiben. In einer gedachten Darstellung des Zustandsraums, bei welcher jeder Zustand $S_t$ durch einen Punkt in einer Landkarte symbolisiert wird, nimmt die Anzahl der Punkte auf der Landkarte zu, ohne daß Punkte verloren gehen.

Die eingesparte Rechnerleistung kann dazu genützt werden, künftige Zustände des Systems zu berechnen, um so eine globale Optimierung anstelle einer lokalen Optimierung zu erreichen. Hierzu wird eine Gesamtgüte Q definiert, in welcher die Güten $u_1$ für mehrere, vorausberechnete Situationsbewertungen SB berücksichtigt werden. Bei N vorausberechneten Zeitschritte ergibt sich:

$$Q_N(s_t, a_t) \quad = \quad \sum_{n=1}^{N} u_{t+n}$$

Aufgrund der Vorausberechnungen ist es nicht mehr notwendig, mittels eines randomwalk-Modells den Kessel selber verschiedene Zustände anfahren zu lassen, um die Bedingungen für den optimalen Verbrennungsprozeß zu finden.

Um das Prozeßmodell PM zu bauen, werden zunächst für die Netzarchitektur die Stellgrößen und die zur Verfügung stehenden Zustandsvariablen samt ihren technisch möglichen und als sinnvoll erachteten Grenzwerten bestimmt, wobei vorzugsweise Erweiterungsmöglichkeiten vorgesehen sind. Für die zu messenden Zustandsvariablen wird eine vor der Eingabe in das neuronale Netz anzuwendende Rauschfilterfunktion definiert. Mit der Methode der optimalen Versuchsplanung wird ein Explorationsplan entworfen, welcher innerhalb der als sinnvoll erachteten Grenzwerte einige Zustände (ca. 500 Stück) auswählt. Der Kessel wird nun nacheinander durch gezielte Stellaktionen zumindest näherungsweise in diese Zustände gebracht, welche dann im neuronalen Netz gespeichert werden. Bei dieser Exploration ist es sinnvoll, nach einer Stellaktion unter Rückgriff auf gespeicherte, vergangene Werte der Zustandsvariablen, welche geglättet und gewichtet (Verhältnis der Zustandsvariablen vor, während und nach.der Stellaktion) werden, eine Vielkanalzeitfunktion zu erstellen, die dann benutzt werden kann, um geordnete Änderungen des Zustands herbeizuführen.

Ausgehend von diesem initialisierten Prozeßmodell PM wird im laufenden Betrieb der Kessel optimal geregelt, indem zunächst im neuronalen Netz in Abhängigkeit der Optimierungsziele $r^j$ ausgehend vom aktuellen Zustand vorab das globale Optimum des Systems und die zur Erreichung dieses Ziels optimalen Stellaktionen numerisch gesucht werden. Die optimalen Stellaktionen können wie folgt gewonnen werden: Ausgehend von dem aktuellen Zustand $s_t$ werden die Auswirkungen verschiedener Aktionen $a^i$, insbesondere Änderungen der signifikanten Stellgrößen, ermittelt, d.h. über das Prozeßmodell PM die Zustände $s^i_{t+1}$ und dann über die Situationsbewertung SM die Güte $u^i_{t+1}$ berechnet, gegebenenfalls mehrere Zeitschritte im voraus. Die Güte $u^i_{t+1}$ bzw. die Gesamtgüte $Q^i$ legt dann automatisch fest, welche Stellgröße geändert werden soll.

$$s_t \; \rightarrow \quad a^I \quad \rightarrow \quad s^I_{t+1} \; \rightarrow \quad u^I_{t+1} \; \ldots \rightarrow Q^I$$

$$\ldots \qquad\qquad \ldots \qquad\qquad \ldots$$

$$a^i \quad \rightarrow \quad s^i_{t+1} \; \rightarrow \quad u^i_{t+1} \; \ldots \rightarrow Q^i$$

$$\ldots \qquad\qquad \ldots \qquad\qquad \ldots$$

Sind die optimalen Stellaktionen $a^i$ ermittelt, führt die Regelungselektronik des Kessels diese Stellaktionen $a^i$ automatisch aus, beispielsweise indem die als Stellgröße behandelte Zufuhr diverser Betriebsstoffe geändert wird. Dabei wird ständig im Kessel eine Datenerfassung und -validierung der Zustandsvariablen vorgenommen, um durch Trainieren des neuronalen Netzes die Dichte der bekannten Zustände $s_t$ in der Landkarte des Zustandsraums zu erhöhen.

Treten nach Erreichen des Optimums weitere Aktionen $a_t$ auf, d.h. geplanten Stellaktionen oder ungeplanten Störungen, ist eine erneute Optimierung mit den beschriebenen Schritten erforderlich. Bei diesem Trainieren des Prozeßmodells PM kann es auch sinnvoll oder notwendig sein, die Netzarchitektur zu erweitern, beispielsweise über die als sinnvoll erachteten Grenzwerte hinaus hin zu den technisch möglichen Grenzwerten, wenn bei der Aufsuchung des Optimums das neuronale Netz häufig an einen als sinnvoll erachteten Grenzwert stößt. Mittels einer Signifikanzprüfung wird laufend festgestellt, welche Stellgrößen den größten Einfluß auf den Zustand des Systems haben, so daß deren Änderung bei der Suche nach dem Optimum bevorzugt berücksichtigt wird, insbesondere wenn eine größere Zustandsänderung notwendig ist.

Prinzipiell würde es für eine Regelung des Kessels ausreichen, wenn von den Aktionen die (üblichen) Stellgrößen und von den Zustandsvariablen einige charakteristische Prozeßparameter berücksichtigt würden. Wenn aber vorliegend auch Störgrößen, wie beispielsweise eine schwankende Kohlequalität oder ein Verschleiß des Kessels K, als Eingaben in das Prozeßmodell eingehen sollen, ist eine Beobachtung des Inneren des Kessels notwendig, beispielsweise durch eine Flammenbeobachtung. Im folgenden sind einige Anwendungsbeispiele beschrieben.

In einem ersten Anwendungsbeispiel läuft ein zu regelnder Verbrennungsprozeß eines Systems in einem Feuerungskessel 1 eines Kohlekraftwerkes ab. Dem Kessel 1 vorgeschaltet ist eine Kohlemühle 3, welche die zu verbrennende Kohle mahlt, die dann dem Kessel 1 zugeführt wird. Dem Kessel 1 wird ferner Kernluft und Ausblasluft zugeführt. Die entstehende Abluft wird aus dem Kessel herausgeführt. Zahlreiche Sensoren 5 an den Zuleitungen zum Kessel 1, an Ableitungen und an den Kesselinnenwänden, beispielsweise für die zugeführte Luft und Kohle, Schadstoffkonzentrationen in der Abluft, Temperaturen im Kessel 1, Flammencharakteristika etc., messen die relevanten Prozeßparameter. Zur Reinigung der Kesselinnenwand ist ein sogenannter Kesselbläser 6 vorgesehen, bei dessen Betätigung die Rückstände an den Kesselinnenwänden verbrennen.

Die Sensoren 5 sind mit einem Rechner 9 verbunden, an welchen auch verschiedene Stellvorrichtungen 13 angeschlossen, wodurch ein Regelkreis gebildet wird. Durch Änderungen von Stellgrößen, beispielsweise des Kohlemassenstroms oder des Luftmengenstroms, wird der Verbrennungsprozeß beeinflußt, d.h. die Prozeßparameter ändern sich. Die Betätigung einer Stellvorrichtung 13, wie beispielsweise eines Ventils in einer Zufuhrleitung der Luft, wird im folgenden als Aktion bezeichnet. Im Rechner 9 ist ein selbstkalibrierendes und selbstlernendes, rekurrentes oder Time-Delayed, neuronales Netz der oben beschriebenen Art implementiert. Das so gebildete System wird zur Optimierung des Verbrennungsprozesses eingesetzt, d.h. der Rechner 9 wertet die ihm zugeführten Informationen aus und steuert entsprechend die Stellvorrichtungen 13 an.

Beispielhaft wird die Betätigung des Kesselbläsers 6 als Aktion behandelt. Hierzu wird in einer Initialisierungsphase untersucht, wie schnell der Kessel 1 bei verschiedenen Kohlesorten und Lastfällen verschmutzt und wie gut die Reinigungserfolge nach Betätigung des Kesselbläsers 6 in Abhängigkeit unterschiedlicher Zeitintervalle $\Delta t$ zwischen zwei Betätigungen des Kesselbläsers 6 sind. Der Reinigungserfolg kann über verschiedene Aktionskonsequenzen definiert werden, beispielsweise über die Änderung von Schadstoffkonzentrationen C in der Abluft normiert auf den Luftmengenstrom oder die Änderung des Wirkungsgrades.

Das neuronale Netz lernt diese technische Seite des Verschmutzungs- und Reinigungsmodells, d.h. die Form der Konsequenzen für die zwei möglichen Aktionen, nämlich den Kesselbläser 6 betätigen oder nicht. Zusätzlich lernt das neuronale Netz eine Kostenseite für das Verschmutzungs- und Reinigungsmodell, d.h. für den Einsatz des Kesselbläsers 6 werden, beispielsweise über den Energieverlust oder Totzeiten, ebenso Kosten definiert, wie für einen schlechten Wirkungsgrad oder ein Überschreiten der zulässigen Schadstoffgrenzwerte in der Abluft.

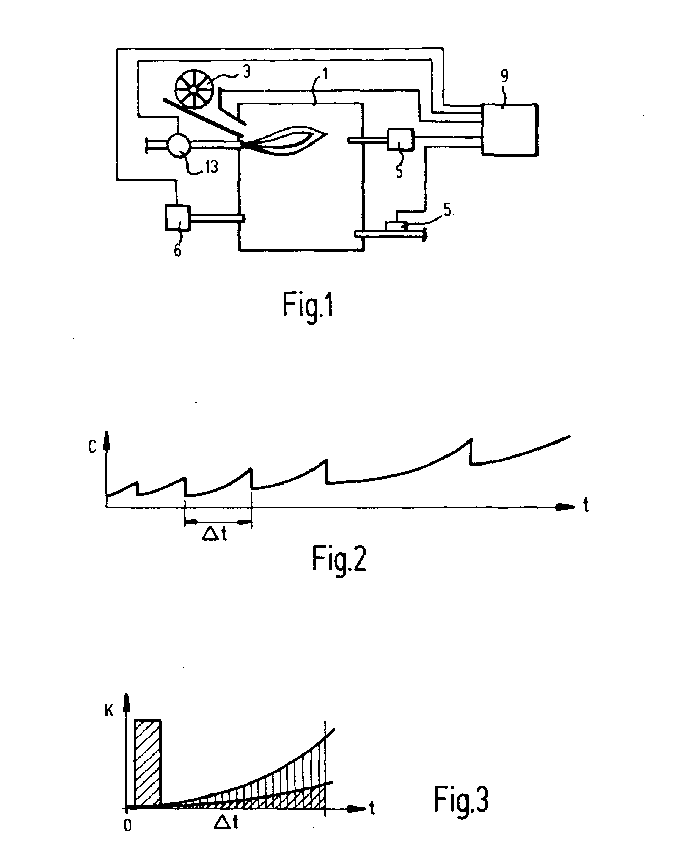

Wenn das neuronale Netz das Verschmutzungs- und Reinigungsmodell gelernt hat, kann die Betätigung des Kesselbläsers 6 zur Regelung des Verbrennungsprozesses eingesetzt werden. Ausgehend von aktuellen Prozeßparametern schätzt das neuronale Netz ab, welche Konsequenzen für die Prozeßparameter eine Betätigung oder keine Betätigung des Kesselbläsers 6 hat, und welche Kosten sich aus diesen beiden Fällen ergeben. In Abhängigkeit eines vorgegeben Planungsintervalls $\Delta t$ werden die Kosten K für beide Fälle aufintegriert. In der Fig. 3 ist das Kostenintegral mit Kesselbläserbetätigung schräg schraffiert und das Kostenintegral ohne Kesselbläserbetätigung senkrecht schraffiert. Der Rechner 9 entscheidet dann in Abhängigkeit dieser Abschätzung, ob der Kesselbläser 6 betätigt werden soll oder nicht.

Als weitere Stellgröße wird die Korngröße der gemahlenen Kohle behandelt, d.h. Aktionen zur Änderung dieser Stellgröße sind verschiedene Stellvorgänge in der steuerbaren Kohlemühle 3, welche sich auf die Feinheit der gemahlenen Kohle auswirken, beispielsweise die Drehzahl der Walzen, der Anstellwinkel der Klappen, der Anpreßdruck der Walzen oder die Temperatur der Austragluft. Die entsprechenden Stellvorrichtungen sind an den gleichen Rechner 9 angeschlossen, in welchem das neuronale Netz implementiert ist.

In der Initialisierungsphase wird entsprechend untersucht, wie sich die Prozeßparameter in Abhängigkeit der Kohlekorngröße ändern. Beispielsweise kann an einer (orts- und) zeitaufgelösten Strahlungsmessung der Flammen im Kessel 1 eine Frequenzanalyse im Orts-Zeit-Raum durchgeführt werden, beispielsweise mittels eines Time-Delay-Neural-Networks oder sogenannten w-flats. Aus der Form, Höhe, Breite und gegebenenfalls einer Verschiebung der Peaks können Informationen über Fluktuation und damit über die Kohlekorngröße gewonnen werden, welche diese Fluktuationen im Flammenbild verursachen.

Das neuronale Netz lernt dieses aus der Initialisierungsphase gewonnene Mühlenmodell und verbessert es im Betrieb des Kessels 1 durch die von den Sensoren 7 gelieferten Erkenntnisse. Als weitere Informationsquelle ist in der Kohlemühle 3 eine Meßvorrichtung installiert, beispielsweise eine (spezielle) Videokamera, wie z.B. eine CCD-Kamera, eine Tiefentastmeßvorrichtung oder eine Gefügeprobenmeßvorrichtung, zur Kalibrierung installiert, die bei jedem Stillstand der Kohlemühle 3, beispielsweise anläßlich von Wartearbeiten, einen Zustandsbericht liefert, der dann im Rechner 9 einer Merkmalsanalyse unterzogen wird, insbesondere hinsichtlich des Verschleißes. Die so gewonnenen Informationen werden mit den anderen Informationen über den Verbrennungsprozeß korreliert und stehen dem Lernprozeß des neuronalen Netzes zur Verfügung. Das Mühlenmodell wird daher ebenfalls zur Regelung des Verbrennungsprozesses eingesetzt.

Die Regelung kann in abgewandelter Form - außer den üblichen Stellgrößen - das Verschmutzungs- und Reinigungsmodell mit dem Kesselbläser 6, aber ohne Berücksichtigung der Kohlekorngröße, oder das Mühlenmodell ohne Kesselbläser 6 einbeziehen..

In einem weiteren Anwendungsbeispiel wird in einem Kessel 1 eines Müllverbrennungsofens der Verbrennungsvorgang durch mehrere Sensoren 5 laufend erfaßt, beispielsweise durch eine Kamera 7, welche das Flammenbild aufnimmt, und durch Abgassensoren 8, welche die gasförmigen Verbrennungsprodukte erfassen. Die verschiedenen Sensoren 5 sind an einen Rechner 9 angeschlossen, in welchem ein neuronales Netz der oben beschriebenen Art implementiert wird, welches aus den Signalen der Sensoren 5 den Zustand im Müllverbrennungsofen 1 ermittelt. Dieser Zustand wird beispielsweise auf einem Monitor 11 angezeigt, beispielsweise unter anderem als Live-Bild.

Um den Verbrennungsvorgang zu regeln, beispielsweise hinsichtlich einer möglichst geringen Schadstoffkonzentration in den Verbrennungsprodukten, kann der Rechner 9 verschiedene Stellvorrichtungen 13 ansteuern, die beispielsweise die Luftzufuhr oder die Zufuhr von Zusatzbrennstoffen definieren. Durch eine vom Rechner 9 berechnete Änderung dieser Stellgrößen ändert sich dann der Zustand im Kessel 1.

Außer den genannten, "online" arbeitenden Sensoren 5 ist als ein "offline" arbeitender Sensor eine Probenentnahmevorrichtung 15 mit angeschlossener Probenauswertung 17 vorgesehen. Wenn der Rechner 9 feststellt, daß der Zustand im Kessel 1 sich einem kritischen Zustand nähert und weitere Daten für die Regelungsstategie hilfreich sind, gibt der Rechner 9 zu einem von ihm festgelegten Zeitpunkt das Signal zur Betätigung der Probenentnahmevorrichtung 15.

Im einfachsten Fall wird die Probenentnahmevorrichtung 15 nach Erscheinen des Entnahmebefehls auf dem Monitor 11 manuell betätigt und die entnommene Probe der Probenauswertung 17 zugeführt. In einer automatisierten Version wird die vom Rechner 9 angesteuerte Probenentnahmevorrichtung 15 maschinell betätigt und die entnommene Probe automatisch der Probenauswertung 17 zugeführt. In allen Fällen liefert die Probenauswertung 17 das Ergebnis der Auswertung, vorzugsweise einer chemischen Analyse, an den Rechner 9, welche die Daten in den Regelungsvorgang einbezieht.

## Patentansprüche

1. Verfahren zur Regelung eines Verbrennungsprozesses, bei dem in einem Kessel (1) eines Kohlekraftwerkes oder eines Müllverbrennungsofens mittels Sensoren (5) die Zustandsvariablen ($s_t$), welche den Zustand des Systems im Kessel (1) beschreiben, gemessen und in einem mit den Sensoren (5) verbundenen Rechner (9) mit Optimierungszielen ($r^j$) bezüglich der Schadstoffkonzentrationen verglichen werden und zur Regelung an den Rechner (9) unter Bildung eines Regelkreises angeschlossene Stellvorrichtungen (13) angesteuert werden, um geeignete Stellaktionen ($a^i$) im System durchzuführen, **dadurch gekennzeichnet, dass** ein von den Optimierungszielen ($r^j$) unabhängiges, Prozessmodell (PM) ermittelt wird, welches gemäß

$$s_{t+1} \quad = \quad f(s_t, \, a_t)$$

die Auswirkungen von Stellaktionen ($a_t$) auf die Zustandsvariablen ($s_t$) des Systems beim Schritt zu den Zustandsvariablen ($s_{t+1}$) des nächsten Zeitpunktes unter Verwendung der Informationen über zeitlich zurückliegende Zustandsvariablen zur Integration in einen zeitlichen Kontext beschreibt, und eine vom Prozessmodell (PM) unabhängige Situationsbewertung (SB) mittels Gütefunktionen ($u_t$) gemäß

$$u_t \quad = \quad \Sigma \, u(r^j, \, s_t)$$

die Zustandsvariablen ($s_t$) in Hinblick auf die Optimierungsziele ($r^j$) bewertet.

2. Verfahren nach Anspruch 1, **dadurch gekennzeichnet, dass** vor der tatsächlichen Durchführung von Stellaktionen ($a^i$) im System numerisch mit dem Prozessmodell (PM) die Auswirkungen verschiedener Stellaktionen ($a^i$) auf die Zustandsvariablen ($s_t$) berechnet und jeweils mit der Situationsbewertung (SB) bewertet werden und dann die optimalen Stellaktionen ($a^i$) im System durchgeführt werden.

3. Verfahren nach Anspruch 2, **dadurch gekennzeichnet, dass** die Auswirkungen verschiedener Stellaktionen ($a^i$) auf die Zustandsvariablen ($s_t$) mehrere Zeitschritte (t) im voraus berechnet werden und eine Gesamtgüte (Q) bewertet wird.

4. Verfahren nach einem der vorhergehenden Ansprüche, **dadurch gekennzeichnet, dass** das Prozessmodell (PM) mit den Informationen aus den laufenden Messungen der Zustandsvariablen ($s_t$) des Systems laufend verfeinert wird.

5. Verfahren nach Anspruch 4, **dadurch gekennzeichnet, dass** die Ergebnisse der laufenden Messungen vor einer Eingabe in das Prozessmodell (PM) einem Rauschfilter unterworfen werden.

6. Verfahren nach einem der vorhergehenden Ansprüche, **dadurch gekennzeichnet, dass** das Prozessmodell (PM) in einem neuronalen Netz gespeichert wird, welches laufend trainiert wird.

**7.** Verfahren nach einem der vorhergehenden Ansprüche, **dadurch gekennzeichnet, dass** vor Beginn des Dauerbetriebs des Systems zur Initialisierung des Prozessmodells (PM) eine Exploration einiger ausgewählter Zustände des Systems durchgeführt wird.

**8.** Verfahren nach Anspruch 7, **dadurch gekennzeichnet, dass** die Exploration das geglättete und gewichtete Zeitverhalten des Systems auf eine Stellaktion ($a^i$) berücksichtigt.

**9.** Verfahren nach einem der vorhergehenden Ansprüche, **dadurch gekennzeichnet, dass** die Gütefunktionen ($u_t$) nach den Regeln einer Fuzzy-Logik aufgestellt werden.

**10.** Verfahren nach einem der vorhergehenden Ansprüche, **dadurch gekennzeichnet, dass** bei der Regelung eines Verbrennungsprozesses in einem mit festem Brennstoff befeuerten Kessel (1) die Betätigung eines Kesselbläsers (6) und/oder die Korngröße des Brennstoffs als Stellgrößen verwendet werden.

**11.** Verfahren nach einem der vorhergehenden Ansprüche, **dadurch gekennzeichnet, dass** ein in einem Kessel (1) stattfindender Verbrennungsvorgang durch wenigstens einen Sensor (5) laufend erfasst und von einem an den Sensor (5) angeschlossenen Rechner (9) ausgewertet wird, wobei mittels einer Probenentnahmevorrichtung (15) eine Probe aus dem Ofen (1) entnehmbar ist und der Rechner (9) den Zeitpunkt zur Betätigung der Probenentnahmevorrichtung (15) festlegt.

**12.** Vorrichtung zur Durchführung eines Verfahrens nach einem der vorhergehenden Ansprüche, mit Sensoren (5) zur Messung der Zustandsvariablen ($s_t$), einem Rechner (9) zur Anwendung des Prozessmodells (PM) zur Situationsbewertung (SB) und einer Rückkopplung auf das System zur Durchführung von Stellaktionen ($a^i$).

## Claims

**1.** Method for controlling a combustion process, in which state variables ($S_t$) in a boiler (1) of a coal-fired power station or a waste incinerator that describe the state of the system in the boiler (1) are measured by means of sensors (5), and in a computer connected to the sensors (5) are compared with optimisation targets ($r^j$) in respect of concentrations of pollutants, and, for control, control devices (13) connected to the computer (9) are activated to form a control loop, in order to perform suitable control actions ($a^i$) in the system, **characterised in that** a process model (PM) that is independent of the optimisation targets ($r^j$) is determined, which in accordance with

$$s_{t+1} \quad = \quad f(s_t, a_t)$$

describes the effects of control actions ($a_t$) on the state variables ($s_t$) of the system during the step to the state variables ($s_{t+1}$) of the next time point using the information about previous state variables for integration into a time context, and **in that** a situational evaluation (SB) independent of the process model (PM) evaluates the status variables ($s_t$) by means of quality functions ($u_t$) with regard to the optimisation targets ($r^j$) in accordance with

$$u_t \quad = \quad \Sigma \, u(r^j, s_t).$$

**2.** Method according to claim 1, **characterised in that** before actually carrying out control actions ($a^i$) in the system, the effects of different control actions ($a^i$) on the state variables ($s_t$) are numerically calculated using the process model (PM) and are each evaluated using the situational evaluation (SB), and then the optimal control actions ($a^i$) in the system are performed.

**3.** Method according to claim 2, **characterised in that** the effects of different control actions ($a^i$) on the state variables ($S_t$) are calculated several time steps (t) in advance and an overall quality (Q) is evaluated.

**4.** Method according to any one of the preceding claims, **characterised in that** the process model (PM) is constantly fine-tuned with information from the ongoing measurements of the state variables ($s_t$) of the system.

**5.** Method according to claim 4, **characterised in that**, before they are input into the process model (PM), the results of the ongoing measurements are subjected to a noise filter.

**6.** Method according to any one of the preceding claims, **characterised in that** the process model (PM) is stored in a neural network that is constantly trained.

**7.** Method according to any one of the preceding claims, **characterised in that**, before commencement of continuous operation of the system, an exploration of a number of selected system statuses is performed to initialise the process model (PM).

**8.** Method according to claim 7, **characterised in that** the exploration takes into account the smoothed and weighted time response of the system to a control action ($a^i$).

**9.** Method according to any one of the preceding claims, **characterised in that** the quality functions ($u_t$) are set up according to the rules of fuzzy logic.

**10.** Method according to any one of the preceding claims, **characterised in that** for controlling a combustion process in a boiler (1) fired with solid fuel, the activation of a boiler blower (6) and/or the particle size of the fuel are used as control variables.

**11.** Method according to any one of the preceding claims, **characterised in that** a combustion process taking place in a boiler (1) is constantly monitored by at least one sensor (5) and evaluated by a computer (9) connected to the sensor (5), wherein by means of a sampling device (15) a sample can be taken from the furnace (1) and the computer (9) determines the time point for activating the sampling device (15).

**12.** Device for carrying out a method according to any one of the preceding claims, having sensors (5) for measuring the state variables ($s_t$), a computer (9) for applying the process model (PM) for situational evaluation (SB), and feedback to the system for performing control actions ($a^i$).

**Revendications**

**1.** Procédé destiné à la régulation d'un processus de combustion, dans lequel les variables d'état ($s_t$) qui décrivent l'état du système dans la chaudière (1) sont mesurées dans une chaudière (1) d'une centrale à charbon ou d'un four d'incinération des déchets au moyen de capteurs (5), et sont comparées dans un ordinateur (9) relié aux capteurs (5) à des objectifs d'optimisation ($r^j$) relatifs à des concentrations de polluants, et sont commandées à des fins de régulation de dispositifs de réglage (13) raccordés à l'ordinateur (9) en formant un circuit de régulation, pour exécuter des actions de réglage ($a^i$) adaptées dans le système, **caractérisé par le fait qu'**un modèle de processus (PM) indépendant des objectifs d'optimisation ($r^j$) est déterminé, qui décrit selon

$$S_{t+1} = f(s_t, a_t)$$

les répercussions des actions de réglage ($a_t$) sur les variables d'état ($s_t$) du système lors de l'étape vers les variables d'état ($S_{t+1}$) du moment suivant en utilisant les informations sur les variables d'état temporellement en amont pour l'intégration dans un contexte temporel, et une évaluation de situation (SB) indépendante du modèle de processus (PM) au moyen des fonctions de qualité ($u_t$) selon

$$u_t = \Sigma u(r^j, s_t)$$

évalue les variables d'état ($s_t$) quant aux objectifs d'optimisation ($r^j$).

**2.** Procédé selon la revendication 1, **caractérisé par le fait que** les répercussions des différentes actions de réglage ($a^i$) sur les variables d'état ($s_t$) sont calculées avant la réalisation effective des actions de réglage ($a^i$) dans le système

numériquement avec le modèle de processus (PM), sont évaluées respectivement avec l'évaluation de situation (SB), puis les actions de réglage optimales ($a^i$) sont exécutées dans le système.

3. Procédé selon la revendication 2, **caractérisé par le fait que** les répercussions des différentes actions de réglage ($a^i$) sur les variables d'état ($s_t$) sont calculées à l'avance dans plusieurs étapes temporelles (t) et une qualité totale (Q) est évaluée.

4. Procédé selon l'une quelconque des revendications précédentes, **caractérisé par le fait que** le modèle de processus (PM) est affiné en continu avec les informations provenant des mesures permanentes des variables d'état ($s_t$) du système.

5. Procédé selon la revendication 4, **caractérisé par le fait que** les résultats des mesures courantes sont soumis avant une entrée dans le modèle de processus (PM) à un filtre de bruit.

6. Procédé selon l'une quelconque des revendications précédentes, **caractérisé par le fait que** le modèle de processus (PM) est enregistré dans un réseau neuronal qui fonctionne en permanence.

7. Procédé selon l'une quelconque des revendications précédentes, **caractérisé par le fait qu'**une exploration de certains états sélectionnés du système est réalisée avant le début du fonctionnement continu du système afin d'initialiser le modèle de processus (PM).

8. Procédé selon la revendication 7, **caractérisé par le fait que** l'exploration prend en compte le comportement temporel lissé et pondéré du système sur une action de réglage ($a^i$) .

9. Procédé selon l'une des revendications précédentes, **caractérisé par le fait que** les fonctions de qualité ($u_t$) sont mises en place selon les règles d'une logique floue.

10. Procédé selon l'une des revendications précédentes, **caractérisé par le fait que** l'actionnement d'un souffleur de chaudière (6) et/ou la grosseur de grain du combustible servent de grandeurs de commande lors du réglage d'un processus de combustion dans une chaudière (1) alimentée en combustible solide.

11. Procédé selon l'une des revendications précédentes, **caractérisé par le fait qu'**un processus de combustion ayant lieu dans une chaudière (1) est détecté en continu par au moins un capteur (5), et est évalué par un ordinateur (9) raccordé au capteur (5), un échantillon pouvant être prélevé du four (1) au moyen d'un dispositif de prélèvement d'échantillons (15), et l'ordinateur (9) déterminant le moment d'actionnement du dispositif de prélèvement d'échantillons (15).

12. Dispositif destiné à exécuter un procédé tel que défini à l'une des revendications précédentes, avec des capteurs (5) destinés à mesurer les variables d'état ($s_t$), un ordinateur (9) destiné à appliquer le modèle de processus (PM) en vue de l'évaluation de situation (SB) et une rétroaction sur le système destinée à réaliser des actions de réglage ($a^i$) .

Fig.1

Fig.2

Fig.3

Fig.4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- Feuerungsoptimierung mit neuronalen Netzen und Fuzzy-Logic an einem Braunkohlekessel. *VGB KraftwerksTechnik,* 2000, vol. 80 (11), 47-50